# EUROPÄISCHE PATENTSCHRIFT

(11) **EP 1 759 778 B1**
(45) Veröffentlichungstag und Bekanntmachung des Hinweises auf die Patenterteilung: **13.08.2008**
(21) Anmeldenummer: 06011996.3
(22) Anmeldetag: 10.06.2006
(51) Int. Cl.: B21B 38/06, G01L 5/04, G01K 13/06

(54) **Messrolle zur Messung der Bandzugspannung und/oder der Bandtemperatur von Bandmaterial**
Measuring roll for measuring the strip tension and/or strip temperature of strip
Rouleau de mesure pour mesurer la tension et/ou la température d'une bande

(30) Priorität: 30.08.2005 DE 202005013642 U
(43) Veröffentlichungstag der Anmeldung: 07.03.2007
(73) Patentinhaber: ACHENBACH BUSCHHÜTTEN GmbH, 57223 Kreuztal (DE)
(72) Erfinder: Barten, Axel, Dipl.-Ing.(ETH), 57078 Siegen (DE); Neukant, Rainer, Dipl.-Ing., 57223 Kreuztal (DE); Stahl, Werner, Ing., 57223 Kreuztal (DE); PETRICEVIC, Raino, Dr., 97072 Würzburg (DE)
(74) Vertreter: Pürckhauer, Rolf

(56) Entgegenhaltungen:
- EP-A- 1 048 370
- DE-A1- 19 747 655
- DE-B4- 10 329 430
- DE-C1- 10 202 413
- DE-U1- 29 721 085

## Beschreibung

Die Erfindung betrifft eine Meßrolle zur Messung der Bandzugspannung und/oder der Bandtemperatur über die Bandbreite beispielsweise beim Walzen von Bandmaterial, mit einem Tragkörper sowie in den Tragkörper der Meßrolle integrierten Sensoren aus einem piezoelektrischen Material zur Messung der auf den Außenmantel des Tragkörpers wirkenden radialen Kraftkomponenten der Bandzugspannungen und/oder der Temperatur des Bandmaterials beziehungsweise des Tragkörpermantels.

Zusätzlich zu den Anforderungen an die Maß- und Formgenauigkeit von gewalztem Bandmaterial ist der durch das Meßverfahren bedingte Oberflächenkontakt der Meßrolle zur Messung der Bandzugspannung und/oder der Bandtemperatur mit der Bandoberfläche im Hinblick auf die Ermittlung genauer Meßwerte von Bedeutung. Insbesondere erfordert beispielsweise die Herstellung von Aluminiumfolien eine hohe Empfindlichkeit der in die Meßrollen integrierten Sensoren.

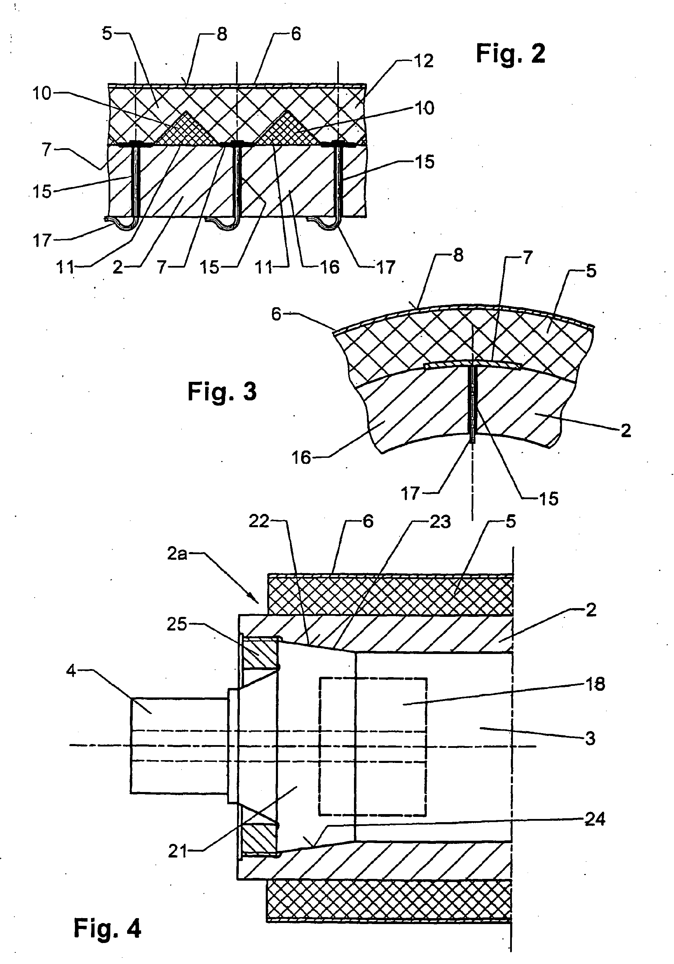

Aus der DE 26 30 410 A1 ist eine Umlenkmeßrolle zum Messen der Spannungsverteilung über die Breite von biegsamen, sich in Längsrichtung bewegenden Bändern bekannt. Bei einer in Figur 2 dargestellten Ausführungsform wird der Einbau eines Piezo-Quarz-Drucksensors mittels eines als kreisförmige Druckkappe ausgebildeten Schraubankers vorgeschlagen. Die Außenfläche der Druckkappe ist dabei vollkommen bündig mit der zylindrischen Mantelfläche der Meßrolle. Unvermeidbar ist jedoch ein Ringspalt zwischen der Druckkappe und der angrenzenden Rollenmantelfläche.

Bei einer aus der DE 42 36 657 C2 bekannten, als Vollrolle ausgebildeten Meßrolle zur Ermittlung der Spannungsverteilung über die Bandbreite beim Walzen dünner Bänder sind die einzelnen Sensoren in einem auf der Zylindermantelfläche der Meßrolle verteilten Muster in Radialbohrungen eingebracht. Zur Befestigung der Sensoren in den Radialbohrungen der Meßrolle und zum Schließen der Bohrungen sind verschraubte Stopfen vorgesehen. Eine besondere Schwierigkeit bei dieser bekannten Meßrolle ist das Entkoppeln der Sensorstopfen vom Meßrollenkörper, insbesondere bei belastungs- und durchbiegungsbedingten Kraftnebenschlüssen bei einem gleichzeitigen Erfordernis eines abgedichteten Ringspaltes zwischen Stopfen und Meßrollenkörper. Bei einem Ringspalt von 0,01 bis 0,05 mm entstehen keine Beschädigungen oder Markierungen auf der Oberfläche des über die Meßrolle laufenden Walzbandes.

Zur Vereinfachung des Sensoreinbaus und zur Vermeidung einer Verschmutzung des Ringspaltes wird nach der DE 196 16 980 A1 vorgeschlagen, die Abdeckung des Meßgebers mit einer Kunststoffschicht zum Verschließen des Ringspaltes auszustatten.

Aus der EP 1 432 536 B1 sind verschiedene Ausführungen der Sensorabdeckung und der Sensorbefestigung bekannt, die dazu dienen, die Aufnahmebohrungen für die Sensoren in der Meßrolle ohne einen Ringspalt abzudichten, um eine Verfälschung der Meßergebnisse durch vom Walzband mitgeschleppte und in den Kunststoff eingedrückte Partikel zu vermeiden. Die einen Meßsensor jeweils aufnehmende Aufnahme wird durch eine Abdeckung abgedichtet, die unter Pressung in die Öffnung der Sensoraufnahme eingesetzt ist. Die Pressung, mit der die Abdeckung in der Öffnung der Aufnahme sitzt, kann ohne Schwierigkeiten derart bemessen werden, daß eine dauerhafte sichere Abdichtung der Aufnahme bei einem gleichzeitigen, im wesentlichen fugenlosen Übergang zwischen der Umfangsfläche der Meßrolle und der Abdeckung gewährleistet ist. Neben den Verformungen der Meßrolle durch Temperaturänderungen treten Verformungen während der Rotation, im Aluminiumfolienwalzbereich über Winkelgeschwindigkeiten von 300 Rad/s, ferner durch Biegebelastungen der Meßrolle infolge ihres Eigengewichtes und durch auf die Rolle wirkende Radialkräfte auf.

Zur Lösung der beim Einsetzen von Sensoren in Aufnahmen einer Meßrolle auftretenden Probleme bei der Abdichtung der Abdeckung der Sensorenaufnahmen wird mit der EP 1 432 537 B1 vorgeschlagen, die Abdeckung mit einem an deren Unterseite ausgebildeten Absatz in eine Einsenkung eines auf den Meßsensor wirkenden Kraftübertragungselementes einzupressen und dabei die Einpreßkraft so zu bemessen, daß einerseits ein dauerhaft fester Sitz der Abdeckung in der Aufnahme für den Sensor in der Meßrolle gewährleistet ist und andererseits ein Eindringen von Schmutz in die Aufnahme sicher vermieden wird. Ferner wird vorgeschlagen, eine in eine Aufnahmeöffnung einer Meßrolle für einen Sensor mit Spiel eingesetzte Abdeckung durch eine Dichtmasse zu verschließen und eine zusätzlichen Ummantelung der Meßrolle vorzusehen.

Die bei den Meßrollen der EP 1 432 536 B1 sowie der EP 1 432 537 B1 auftretenden Schwierigkeiten bei der Abdichtung der Abdeckung der in Aufnahmen der Meßrolle eingesetzten Sensoren werden bei der aus der WO 03/061865 bekannten Meßrolle dadurch vermieden, daß die Meßrolle als Vollrolle mit achsparallelen Bohrungen zum Einsetzen von Sensoren ausgebildet ist, wobei die Aufnahmebohrungen mit einem geringen Abstand von beispielsweise 1 bis 30 mm, vorzugsweise 5 bis 10 mm unterhalb der Messrollenoberfläche angeordnet sind, so dass sich über den eingespannten Sensoren ein dünner Biegebalken befindet. Je geringer die Dicke des Biegebalkens ist, umso günstiger wirkt sich dies auf das Messergebnis aus. Ferner wird zur Verbesserung des elastischen Verhaltens des Biegebalkens vorgeschlagen, eine rechteckige Längsausnehmung zur Aufnahme der Sensoren mit seitlichen Schlitzen zu versehen.

Für die Anwendung in Druckwerken, Druckmaschinen und Farbwerken wird mit der DE 103 29 430 B4 vorgeschlagen, zur Einstellung der Walzenpressung an der Nippstelle beziehungsweise im Walzspalt zwischen einer Druckwalze und einer Gegendruckwalze zur Detektierung der Walzenschwingungen und zu deren Kompensation durch Aufbringen einer modulierten Kraft in die Gegendruckwalze wenigstens ein teilweise den Umfang der Walze umschlingendes Drucksensorenelement vorzusehen, das einen Umfangsbereich von bis zu 360° umfassen kann. Als Drucksensor kommt ein organisches Material mit piezoelektrischen Eigenschaften zum Einsatz, dessen piezoelektrisches Material an Fasern gebunden ist, die im wesentlichen in Dickenrichtung des Drucksensors und somit senkrecht zu Walzenoberfläche verlaufen.

Diese Faseranordnung hat den Nachteil, dass beim Versagen oder Bruch einzelner keramischer Fasern aufgrund einer Stauchung der Fasern in Richtung der Faserlängsachse durch die von außen auf die Drucksensoren wirkenden Nippkräfte die durch eine Stauchung der Fasern erzeugten Piezospannungssignale um den Anteil der unterbrochenen Fasern verringert und dadurch die Druckmessungen ungenau werden.

Der Erfindung liegt die Aufgabe zugrunde, eine Messrolle zur Messung der Bandzugspannung und/oder der Bandtemperatur über die Bandbreite beispielsweise beim Walzen von Bandmaterial mit einer geschlossenen Oberfläche, einem geringen Massenträgheitsmoment und einer hohen Sensitivität zu entwickeln.

Diese Aufgabe wird erfindungsgemäß gelöst durch eine Meßrolle mit den Merkmalen des Patentanspruchs 1.

Die Unteransprüche beinhalten vorteilhafte und zweckmäßige Weiterbildungen der Erfindung.

Die erfindungsgemäße Messrolle zeichnet sich durch folgende Vorteile aus:

Die Verwendung von Drucksensoren aus einem piezoelektrischen Material, das an Fasern gebunden ist, die in Längsrichtung der Sensoren angeordnet sind und parallel zur äußeren Mantelfläche der Messrolle verlaufen, die Ausstattung der Messrolle mit einem rohrförmigen Tragkörper aus Stahl, gegebenenfalls auch aus Leichtmetall oder einem Compoundmaterial und die dadurch bedingte Verringerung des Massenträgheitsmomentes der Meßrolle und die damit verbundene weitgehende Ausschaltung unerwünschter dynamischer Effekte sowie das Aufbringen einer strukturierten Ummantelung auf den Tragkörper, die bereichsweise unterschiedliche Elastizitäten zur Bündelung der auf die Messrolle wirkenden radialen Druckkräfte auf die aktiven Sensorflächen aufweist, ermöglichen eine optimale Messgenauigkeit der Meßrolle.

Die Anordnung der Piezofasern aus keramischem Material, an die das piezoelektrische Material gebunden ist, in Längsrichtung der Sensoren und parallel zur äußeren Mantelfläche der Messrolle ermöglicht es, die Piezospannungssignale, die durch die auf die Messrolle einwirkenden äußeren Druckkräfte erzeugt werden, über auf gegenüberliegenden Außenflächen des Faserbündels der Sensoren angeordnete Elektroden abzugreifen. Die Anordnung der Piezofasern und der zugehörigen Abgreifelektroden gewährleistet eine hohe Betriebssicherheit der Messrolle, da beim Versagen oder Bruch einzelner keramischer Fasern die auswertbaren Signale erhalten bleiben.

Bei einer Drehbewegung und einer zusätzlichen Einwirkung des Eigengewichtes sowie der aus der Umlenkung des Walzbandes resultierenden Kraft stellt sich eine Durchbiegung der Meßrolle ein. Diese Belastungen führen zu einer elastischen Verformung der Meßrolle in Richtung der resultierenden Gesamtbelastung. Hierbei erweisen sich die unmittelbar auf der Oberfläche des Tragkörpers der Meßrolle befindliche Sensoranordnung sowie der axiale Verlauf der Fasern der Piezo-Sensorelemente parallel zur Oberfläche des Tragkörpers als besonders förderlich für die Meßgenauigkeit der Meßrolle.

Die Erfindung ist nachstehend anhand von Zeichnungsfiguren erläutert, die folgendes darstellen:
- Fig. 1: einen Teillängsschnitt einer Meßrolle mit einem angeflanschtem Lagerzapfen,
- Fig. 2: eine ausschnittsweise vergrößerte Längsschnittdarstellung der mit Drucksensoren bestückten Meßrolle nach Figur 1,
- Fig. 3: eine ausschnittsweise vergrößerte Querschnittsdarstellung der Meßrolle nach Figur 1 mit einem Drucksensor und
- Fig. 4: einen Teillängsschnitt einer Meßrolle mit einem Lagerzapfen in einer konischen Aufnahme.

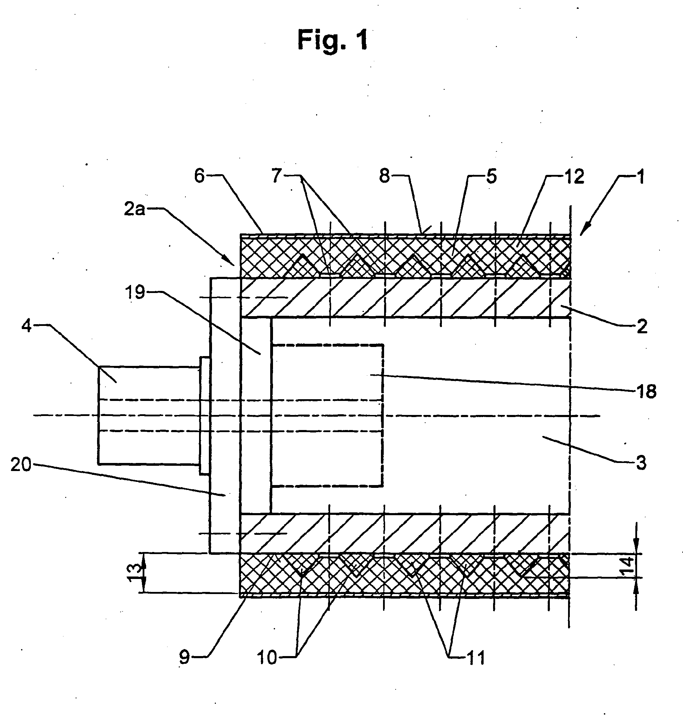

Die Meßrolle 1 nach den Figuren 1 bis 4 zur Messung der Bandzugspannung und/oder der Bandtemperatur über die Bandbreite beispielsweise beim Walzen von Walzband wird durch einen rohrförmigen Tragkörper 2, an den beiden Stirnseiten 2a des Tragkörpers 2 in dessen Durchgangsöffnung 3 eingesetzte Lagerzapfen 4, eine auf den Tragkörper 2 aufgebrachte Ummantelung 5, gegebenenfalls eine die Ummantelung 5 umschließende verschleißhemmende Außenschicht 6 sowie in die Meßrolle 1 integrierte Sensoren 7 aus einem piezoelektrischen Material zur Messung der auf die Außenmantelfläche 8 wirkenden radialen Druckkraftkomponenten der Bandzugspannungen des Walzbandes gebildet.

Das piezoelektrische Material der Sensoren 7 ist an Fasern gebunden, die in Längsrichtung der Sensoren angeordnet sind und parallel zur Außenmantelfläche 8 der Meßrolle 1 beziehungsweise zur Oberfläche 9 des Tragkörpers 2 der Meßrolle verlaufen.

Die strukturierte Ummantelung 5 des Tragkörpers 2 der Messrolle 1 ist mit beabstandeten Füllräumen 10 versehen, die ein Material 11 aufnehmen, das eine höhere Elastizität als das Material 12 der Ummantelung 5 aufweist. Die Sensoren 7 sind auf dem Tragkörper 2 jeweils zwischen zwei benachbarten, beabstandeten Füllräumen 10 angeordnet.

Die Wandstärke 13 der Ummantelung 5 liegt beispielsweise zwischen 4 und 25 mm, vorzugsweise 5 bis 15 mm, wobei das Verhältnis der Wandstärke 13 der Ummantelung 5 zur Tiefe 14 der Füllräume 10 1,1 bis 2,5 betragen soll.

Die Sensoren 7 sind über durch radiale Bohrungen 15 in der Wand 16 des Tragkörpers 2 und die Durchgangsöffnung 3 der Ummantelung 5 verlegte Anschlussdrähte 17 an einen Schleifring-, Rollring- oder Flüssigmetall-Drehübertrager zur Übertragung der Messwerte angeschlossen. Die Übertragung der Messwerte kann auch kontaktlos, zum Beispiel durch ein optisches oder ein Funk-Datenübertragungssystem erfolgen.

In einer vorteilhaften Ausführungsform der Messrolle erfolgt eine Vorverarbeitung der Messwerte durch einen in den Tragkörper 2 der Messrolle 1 integrierten Mikroprozessor 18 mit der erforderlichen Peripherie, zum Beispiel Datenspeicher, Analog/Digitalwandlung und Datenübertragungssteuerung. Durch diese Vorverarbeitung der Rohdaten kann eine Komprimierung derart erzielt werden, dass nur die Nutzdaten aus der rotierenden Messrolle übertragen werden müssen und somit dann auch standardisierte, kontaktlose Übertragungsverfahren mit limitierter Bandbreite wie zum Beispiel Bluetooth oder Wireless LAN geeignet sind.

Die über den Tragkörper 2 der Meßrolle 1 im Bereich des Walzbandes verteilten Drucksensoren 7 können mit einer oder mehreren über die Ballenlänge der Meßrolle verteilten, auf dem Tragkörper 2 von innen oder außen angebrachten Temperatursensoren kombiniert werden, so daß einerseits die Möglichkeit einer Temperaturkompensation der Drucksensorsignale gegeben ist, andererseits aber auch das Temperaturprofil des Walzbandes über die Bandbreite und auch die Temperatur der Meßrolle oder Temperaturprofile innerhalb der Meßrolle für eine technologische Regelung ausgewertet werden können.

Die Meßrolle kann mit der doppelten Anzahl der erforderlichen Druck- und Temperatursensoren als Ersatz beim Ausfall eines Sensors oder mehrerer Sensoren ausgestattet sein.

Ferner besteht die Möglichkeit, die Meßrolle 1 mit einer nicht dargestellten Einrichtung zur Messung der belastungsabhängigen Verformung des Tragkörpers 2 in Rollenlängsrichtung für die Korrektur der durch die Verformung veränderten Meßwerte auszurüsten.

Die Lagerzapfen 4 der Meßrolle 1 sind mit ihrem zylindrischen Einsteckende 19 in die Durchgangsöffnung 3 des Tragkörpers 2 eingesetzt und mit einem Flansch 20 an den beiden Stirnseiten 2a des Tragkörpers 2 festgeschraubt.

Bei einer weiteren Ausführungsform der Meßrolle 1 nach Figur 4 weisen die Lagerzapfen 4 ein Einsteckende 21 mit einem Außenkonus 22 zum Einsetzen in eine Aufnahme 23 des rohrförmigen Tragkörpers 2 mit einem entsprechenden Innenkonus 24 auf, und die beiden Lagerzapfen sind mittels einer Zentralmutter 25 in dem Tragkörper 2 festgespannt und aus diesem herausziehbar.

Die Durchgangsöffnung 3 des rohrförmigen Tragkörpers 2 kann als Strömungskanal für ein Kühlmittel dienen.

## Patentansprüche

1. Messrolle zu Messung der Bandzugspannung und/oder der Bandtemperatur über die Bandbreite beispielsweise beim Walzen von Bandmaterial, mit einem Tragkörper (2) sowie in diesen integrierten Sensoren (7) aus einem piezoelektrischen Material zur Messung der auf den Außenmantel des Tragkörpers (2) wirkenden radialen Kraftkomponenten der Bandzugspannungen und/oder der Temperatur des Bandmaterials beziehungsweise des Tragkörpermantels, **dadurch gekennzeichnet, dass** der rohrförmige Tragkörper (2) eine Ummantelung (5) aufweist und die Sensoren (7) zwischen dem Tragkörper (2) und der Ummantelung (5) angeordnet sind und dass das piezoelektrische Material der Sensoren (7) an Fasern gebunden ist, die in Längsrichtung der Sensoren (7) angeordnet sind und parallel zur Oberfläche (9) des Tragkörpers (2) der Messrolle (1) verlaufen.

2. Messrolle nach Anspruch 1, **gekennzeichnet durch** eine strukturierte Ummantelung (5) des Tragkörpers (2) mit beabstandeten Füllräumen (10) zur Aufnahme eines Materials (11), das eine höhere Elastizität als das Material (12) der Ummantelung (5) aufweist, wobei die Sensoren (7) jeweils zwischen zwei benachbarten Füllräumen (10) angeordnet sind.

3. Messrolle nach Anspruch 2, **dadurch gekennzeichnet, dass** das Material (12) der Ummantelung (5) eine niedrige und das Material (11) der Füllräume (10) eine hohe elastische Eigenschaft aufweist.

4. Messrolle nach Anspruch 2 und 3, **dadurch gekennzeichnet, dass** das Material (11) der Füllräume (10) der Ummantelung (5) aus einem geschäumten Kunststoffmaterial mit hoher Elastizität besteht.

5. Messrolle nach einem der Ansprüche 1 bis 4, **dadurch gekennzeichnet, dass** die Ummantelung (5) eine verschleißhemmende Außenschicht (6) aufweist.

6. Messrolle nach einem der Ansprüche 1 bis 5, **dadurch gekennzeichnet, dass** der Tragkörper (2) aus Leichtmetall hergestellt ist.

7. Messrolle nach einem der Ansprüche 1 bis 5, **dadurch gekennzeichnet, dass** der Tragkörper (2) aus einem Compoundmaterial besteht.

8. Messrolle nach einem der Ansprüche 1 bis 7, **dadurch gekennzeichnet, dass** diese (1) über die Bandbreite mit mindestens einem Temperatursensor zur Temperaturkompensation der Drucksensorsignale ausgestattet ist.

9. Messrolle nach einem der Ansprüche 1 bis 8, **dadurch gekennzeichnet, dass** diese (1) über die Bandbreite mit mindestens zwei Temperatursensoren zur Messung des Temperaturprofils des Bandmaterials ausgerüstet ist.

10. Messrolle nach einem der Ansprüche 1 bis 9, **dadurch gekennzeichnet, dass** diese (1) über ihre Länge mit mindestens drei Temperatursensoren zur Erfassung des Temperaturverlaufes über die Bandbreite für eine technologische Regelung ausgestattet ist.

11. Messrolle nach einem der Ansprüche 1 bis 10, **gekennzeichnet durch** eine Doppelausstattung mit Druck- und/oder Temperatursensoren als Ersatz beim Ausfall eines oder mehrerer Sensoren.

12. Messrolle nach einem der Ansprüche 1 bis 11, **gekennzeichnet durch** einen in den Tragkörper (2) integrierten Mikroprozessor (18) zur Vorverarbeitung der Messwerte.

13. Messrolle nach einem der Ansprüche 1 bis 12, **dadurch gekennzeichnet, dass** diese (1) mit einer Einrichtung zur Messung der belastungsabhängigen Verformung des Tragkörpers (2) in Rollenlängsrichtung für die Korrektur der durch die Verformung veränderten Messwerte ausgerüstet ist.

14. Messrolle nach einem der Ansprüche 1 bis 13, **dadurch gekennzeichnet, dass** einer oder beide Lagerzapfen (4) der Messrolle (1)ein Einsteckende (21) mit einem Außenkonus (22) zum Einsetzen des beziehungsweise der Lagerzapfen (4) in eine Aufnahme (23) des rohrförmigen Tragkörpers (2) mit einem entsprechenden Innenkonus (24) aufweist beziehungsweise aufweisen und dass der beziehungsweise die Lagerzapfen (4) mittels einer Zentralmutter (25) in dem Tragkörper (2) festspannbar und aus dem Tragkörper herausziehbar ist beziehungsweise sind.

15. Messrolle nach einem der Ansprüche 1 bis 14, **dadurch gekennzeichnet, dass** die Durchgangsöffnung (3) des Tragkörpers (2) als Strömungskanal für ein Kühlmittel ausgebildet ist.

## Claims

1. Measuring roller for measuring the strip tension and/or the strip temperature across the strip width, for example when rolling strip material, having a carrier body (2) and also sensors (7) which are integrated in the latter and made of a piezoelectric material for measuring the radial force components of the strip tensions which are acting on the outer jacket of the carrier body (2) and/or the temperature of the strip material or of the carrier body jacket, **characterised in that** the tubular carrier body (2) has a casing (5) and the sensors (7) are disposed between the carrier body (2) and the casing (5) and **in that** the piezoelectric material of the sensors (7) is bonded to fibres which are disposed in the longitudinal direction of the sensors (7) and extend parallel to the surface (9) of the carrier body (2) of the measuring roller (1).

2. Measuring roller according to claim 1, **characterised by** a structured casing (5) of the carrier body (2) with filling cavities (10) at a spacing for receiving a material (11) which has a higher elasticity than the material (12) of the casing (5), the sensors (7) being disposed respectively between two adjacent filling cavities (10).

3. Measuring roller according to claim 2, **characterised in that** the material (12) of the casing (5) has a low elastic property and the material (11) of the filling cavities (10) has a high elastic property.

4. Measuring roller according to claim 2 and 3, **characterised in that** the material (11) of the filling cavities (10) of the casing (5) comprises a foamed plastic material with high elasticity.

5. Measuring roller according to one of the claims 1 to 4, **characterised in that** the casing (5) has a wear-inhibiting outer layer (6).

6. Measuring roller according to one of the claims 1 to 5, **characterised in that** the carrier body (2) is produced from light metal.

7. Measuring roller according to one of the claims 1 to 5, **characterised in that** the carrier body (2) comprises a compound material.

8. Measuring roller according to one of the claims 1 to 7, **characterised in that** the latter (1) is equipped across the strip width with at least one temperature sensor for temperature compensation of the pressure sensor signals.

9. Measuring roller according to one of the claims 1 to 8, **characterised in that** the latter (1) is equipped across the strip width with at least two temperature sensors for measuring the temperature profile of the strip material.

10. Measuring roller according to one of the claims 1 to 9, **characterised in that** the latter (1) is equipped across the length thereof with at least three temperature sensors for detecting the temperature course across the strip width for technological control.

11. Measuring roller according to one of the claims 1 to 10, **characterised by** a double fitting with pressure and/or temperature sensors as replacement during failure of one or more sensors.

12. Measuring roller according to one of the claims 1 to 11, **characterised by** a microprocessor (18) which is integrated in the carrier body (2) for pre-processing the measured values.

13. Measuring roller according to one of the claims 1 to 12, **characterised in that** the latter (1) is equipped with a device for measuring the load-dependent deformation of the carrier body (2) in the roller longitudinal direction for correction of the measured values which are altered by the deformation.

14. Measuring roller according to one of the claims 1 to 13, **characterised in that** one or both bearing journals (4) of the measuring roller (1) has or have an insertion end (21) with an outer cone (22) for inserting the bearing journal(s) (4) into a receiving means (23) of the tubular carrier body (2) with a corresponding inner cone (24), and **in that** the bearing journal(s) (4) can be tightened in the carrier body (2) by means of a central nut (25) and can be extracted from the carrier body.

15. Measuring roller according to one of the claims 1 to 14, **characterised in that** the through-opening (3) of the carrier body (2) is configured as flow channel for a coolant.

## Revendications

1. Rouleau de mesure de l'effort de traction et/ou de la température d'une bande sur sa largeur, par exemple lors du laminage de matériau en bande, comprenant un corps (2) de support ainsi que des capteurs (7) en un matériau piézoélectrique qui y sont intégrés pour mesurer les composantes de forces radiales, des efforts de traction de la bande et/ou de la température de la matière en bande ou de la surface latérale du corps de support, agissant sur la surface latérale extérieure du corps (2) de support, **caractérisé en ce que** le corps (2) de support tubulaire a une enveloppe (5) et les capteurs (7) sont disposés entre le corps (2) de support et l'enveloppe (5) et **en ce que** le matériau piézoélectrique des capteurs est lié à des fibres qui sont disposées dans la direction longitudinale des capteurs (7) et qui s'étendent parallèlement à la surface (9) du corps (2) de support du rouleau (1) de mesure.

2. Rouleau de mesure suivant la revendication 1, **caractérisé par** une enveloppe (5) structurée du corps (2) de support, ayant des espaces (10) de remplissage, distants les uns des autres, de réception d'un matériau (11) qui a une élasticité plus grande que le matériau (12) de l'enveloppe (5), les capteurs (7) étant disposées respectivement entre deux espaces (10) de remplissage voisins.

3. Rouleau de mesure suivant la revendication 2, **caractérisé en ce que** le matériau (12) de l'enveloppe (5) a une propriété élastique petite et le matériau (11) des espaces (10) de remplissage une propriété élastique grande.

4. Rouleau de mesure suivant les revendications 2 et 3, **caractérisé en ce que** le matériau (11) des espaces (10) de remplissage de l'enveloppe (5) est en une matière plastique alvéolée ayant une grande élasticité.

5. Rouleau de mesure suivant l'une des revendications 1 à 4, **caractérisé en ce que** l'enveloppe (5) a une couche (6) extérieure anti-usure.

6. Rouleau de mesure suivant l'une des revendications 1 à 5, **caractérisé en ce que** le corps (2) de support est en un métal léger.

7. Rouleau de mesure suivant l'une des revendications 1 à 5, **caractérisé en ce que** le corps (2) de support est en un matériau composite.

8. Rouleau de mesure suivant l'une des revendications 1 à 7, **caractérisé en ce que** celui-ci (1) est équipé sur la largeur de la bande d'au moins un capteur de température pour compenser la température des signaux de capteur de pression.

9. Rouleau de mesure suivant l'une des revendications 1 à 8, **caractérisé en ce que** celui-ci (1) est équipé sur la largeur de la bande d'au moins deux capteurs de température pour mesurer le profil de température du matériau en bande.

10. Rouleau de mesure suivant l'une des revendications 1 à 9, **caractérisé en ce que** celui-ci (1) est équipé sur sa longueur d'au moins trois capteurs de température pour relever la courbe de température sur la largeur de la bande pour une régulation technologique.

11. Rouleau de mesure suivant l'une des revendications 1 à 10, **caractérisé par** un double équipement de capteur de pression et/ou de capteur de température en remplacement, dans le cas d'une panne d'un capteur ou de plusieurs capteurs.

12. Rouleau de mesure suivant l'une des revendications 1 à 11, **caractérisé par** un microprocesseur (18) intégré au corps (2) de support pour le traitement préalable des valeurs de mesure.

13. Rouleau de mesure suivant l'une des revendications 1 à 12, **caractérisé en ce que** celui-ci (1) est équipé d'un dispositif de mesure de la déformation en fonction de la charge du corps (2) de support dans la direction longitudinale du rouleau pour la correction des valeurs de mesure modifiées par la déformation.

14. Rouleau de mesure suivant l'une des revendications 1 à 13, **caractérisé en ce qu'**un tourillon (4) de palier ou les deux tourillons de palier du rouleau (1) de mesure a ou ont une pièce à emmancher (21) ayant un cône (22) extérieur pour insérer le ou les tourillons (4) de palier dans un logement (23) du corps (2) de support tubulaire ayant un cône (24) intérieur correspondant et **en ce que** le ou les tourillons (4) de palier peuvent être bloqués au moyen d'un écrou (25) central dans le corps (2) de support et en être retirés.

15. Rouleau de mesure suivant l'une des revendications 1 à 14, **caractérisé en ce que** l'ouverture (3) de passage du corps (2) de support est constituée en canal d'écoulement d'un fluide de refroidissement.
